# DEMANDE DE BREVET EUROPEEN

(11) **EP 1 405 759 A2**
(43) Date de publication de la demande: **07.04.2004**
(21) Numéro de dépôt: 03103660.1
(22) Date de dépôt: 02.10.2003
(51) Int. Cl.: B60N 3/00

(54) **Agencement d'une table escamotable dans l'habitacle d'un véhicule automobile**

(30) Priorité: 03.10.2002 FR 0212253
(71) Demandeur: Renault s.a.s., 92100 Boulogne Billancourt (FR); ADAM OPEL AG, 65423 Rüsselsheim (DE)
(72) Inventeur: Michelin, M. Didier, 78950, Gambais (FR)
(74) Mandataire: Kohn, Philippe

(57) **Abrégé**

La présente invention concerne l'agencement d'une table (10) escamotable dans l'habitacle d'un véhicule automobile, comportant une console (12) qui est montée sur le plancher du véhicule et qui délimite un compartiment pour le rangement de la table (10) en position escamotée, du type dans lequel la table (10) comporte au moins un panneau (28) qui s'étend globalement dans un plan longitudinal vertical, en position escamotée, et qui s'étend globalement dans un plan horizontal, en position d'utilisation.
L'agencement est caractérisé en ce que le panneau (28) est monté à pivotement sur une portion centrale (26) de manière que le panneau (28) parvienne à sa position d'utilisation, à partir de sa position escamotée, en pivotant, dans un premier temps, vers l'arrière et vers le haut, avec la portion centrale (26), autour d'un axe transversal (A5) et, dans un second temps, vers un côté et vers le haut, autour de son axe longitudinal (A1).

## Description

La présente invention concerne l'agencement d'une table escamotable dans l'habitacle d'un véhicule automobile.

L'invention concerne plus particulièrement l'agencement d'une table escamotable dans l'habitacle d'un véhicule automobile, comportant une console qui est montée sur le plancher du véhicule et qui délimite un compartiment pour le rangement de la table en position escamotée, du type dans lequel la table comporte au moins un panneau qui s'étend globalement dans un plan longitudinal vertical, en position escamotée, et qui s'étend globalement dans un plan horizontal, en position d'utilisation.

Les véhicules ayant un habitacle très modulables du type « monospaces » et les petits véhicules utilitaires pour le transport de passagers, sont de plus en plus employés pour une utilisation « loisirs », en week-end ou en vacances. Ce type d'utilisation a fait apparaître le besoin de prévoir une table à l'intérieur des véhicules. Cette table doit être escamotable, pour ne pas diminuer l'espace disponible à l'intérieur de l'habitacle du véhicule, lorsque la table n'est pas utilisée.

On connaît déjà des véhicules particuliers dans lesquels les dossiers des sièges sont munis de tablettes relevables. De telles tablettes sont toujours de très petites dimensions, de sorte qu'elles ne permettent pas de poser plus de deux gobelets, ou canettes, et qu'elles forment des écritoires symboliques.

Dans certains véhicules de loisirs, réalisés sur la base de véhicules utilitaires, il est prévu une table escamotable qui se déploie, soit depuis un garnissage intérieur latéral de l'habitacle, soit depuis une console agencée au centre de l'habitacle.

Lorsque la table se déploie depuis le garnissage intérieur latéral, elle ne peut être utilisée que dans la moitié de l'habitacle correspondante, de sorte que les passagers situés dans l'autre moitié de l'habitacle ne sont pas en mesure d'utiliser la table.

Lorsque la table se déploie depuis la console centrale, elle se déplie généralement de chaque côté de la console, de sorte qu'elle peut s'étendre globalement sur toute la largeur de l'habitacle. Cependant, lorsque la table est escamotée dans la console, la console encombre inutilement la partie centrale de l'habitacle.

L'invention vise à remédier à ces inconvénients en proposant une solution simple et économique.

Dans ce but, l'invention propose un agencement du type décrit précédemment, caractérisé en ce que la table comporte une portion centrale sur laquelle le panneau est articulé autour d'un axe sensiblement parallèle à un bord longitudinal latéral de la portion centrale ; en ce que la portion centrale est articulée autour d'un axe sensiblement transversal, entre la position escamotée, dans laquelle les bords longitudinaux de la portion centrale s'étendent globalement verticalement vers le bas, à l'intérieur de la console, et la position d'utilisation, dans laquelle les bords longitudinaux de la portion centrale s'étendent globalement longitudinalement vers l'arrière, à l'extérieur de la console, de manière que le panneau parvienne à sa position d'utilisation, à partir de sa position escamotée, en pivotant, dans un premier temps, vers l'arrière et vers le haut, avec la portion centrale, autour de l'axe transversal et, dans un second temps, vers un côté et vers le haut, autour de son axe longitudinal.

Selon d'autres caractéristiques de l'invention :
- la console délimite à l'arrière une ouverture pour le passage de la table lorsqu'elle pivote autour de son axe transversal, et, en position escamotée, la portion centrale forme un élément de fermeture de ladite ouverture ;
- l'axe transversal de pivotement de la portion centrale est agencé à l'extrémité arrière libre d'au moins une coulisse, qui coopère avec une glissière, agencée dans la console, de manière à permettre le déplacement de l'axe transversal de pivotement, depuis l'intérieur de la console, en position escamotée, vers l'extérieur et vers le haut, en position d'utilisation ;
- une biellette de soutien est articulée sur la portion centrale et est montée coulissante longitudinalement à l'intérieur de la console, jusqu'à une position arrière indexée correspondant à la position d'utilisation, de manière à former un dispositif de soutien de la portion centrale en position d'utilisation ;
- l'articulation du panneau est agencée au voisinage d'un bord longitudinal de la portion centrale ;
- l'axe de pivotement longitudinal du panneau est mobile suivant une direction sensiblement orthogonale à un bord longitudinal de la portion centrale, entre une position distale et une position proximale, par rapport audit bord longitudinal.
- le panneau comporte deux plaques qui sont superposées dans le sens de l'épaisseur et qui sont articulées, l'une par rapport à l'autre, de sorte que l'une des plaques puisse être déployée par rapport à l'autre en augmentant l'aire de la table dans un plan horizontal ;
- la portion centrale est équipée de deux panneaux qui sont articulés autour de deux axes longitudinaux associés à chaque bord longitudinal de la portion centrale.

D'autres caractéristiques et avantages de l'invention apparaîtront à la lecture de la description détaillée qui suit pour la compréhension de laquelle on se reportera aux dessins annexés dans lesquels :
- la figure 1 est une vue partielle en perspective qui représente schématiquement une table en position escamotée, conformément à un premier mode de réalisation de l'invention ;
- la figure 2 est une vue en coupe longitudinale 2-2 avec arrachement qui représente schématiquement la table de la figure 1 en position escamotée ;
- la figure 3 est une vue similaire à celle de la figure 2 qui représente une première position intermédiaire de la table au cours de son déploiement ;
- la figure 4 est une vue similaire à celle de la figure 2 qui illustre le déplacement d'une biellette de la table par rapport à la figure 3 ;
- la figure 5 est une vue similaire à celle de la figure 2 qui représente une seconde position intermédiaire de la table au cours de son déploiement ;
- la figure 6 est une vue partielle de face qui représente schématiquement la table en position horizontale d'utilisation et qui illustre le déploiement des panneaux latéraux de la table à partir de la seconde position intermédiaire ;
- la figure 7 est une vue similaire à celle de la figure 6 qui illustre le déploiement des plaques superposées formant les panneaux latéraux, à partir de la position d'utilisation de la table ;
- la figure 8 est une vue similaire à celle de la figure 1 qui représente schématiquement une table en position escamotée conformément à un deuxième mode de réalisation de l'invention ;
- la figure 9 est une vue similaire à celle de la figure 1 qui représente la table de la figure 8 lorsque sa portion centrale occupe une position horizontale d'utilisation, le déploiement des panneaux latéraux étant en cours ;
- la figure 10 est une vue partielle en perspective qui représente schématiquement une rainure de guidage et un pion de la table de la figure 8 ;
- les figures 11 et 12 sont des vues similaires à celle de la figure 6 qui illustrent la cinématique du déploiement d'un panneau latéral de la table de la figure 8 ;
- la figure 13 est une vue similaire à celle de la figure 6 qui représente schématiquement la table de la figure 8 en position horizontale d'utilisation.

Dans la suite de la description, des éléments identiques ou similaires seront désignés par les mêmes références.

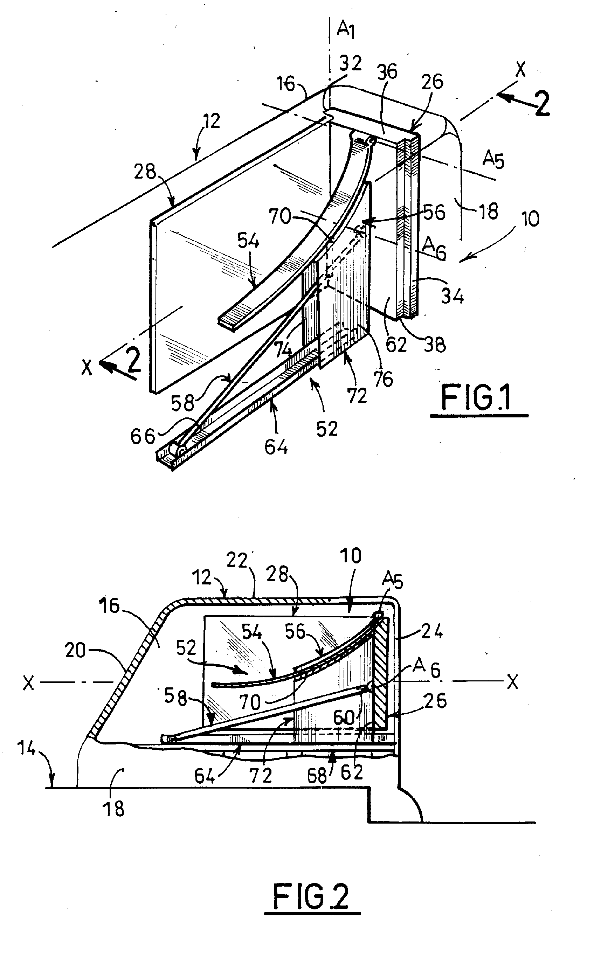

Les figures 1 à 7 représentent l'agencement d'une table escamotable 10 qui est réalisé conformément aux enseignements de l'invention, selon un premier mode de réalisation.

Sur les figures 1 et 2, la table 10 est représentée en position escamotée, ou position de rangement, dans une console 12 montée sur le plancher 14 d'un véhicule. Avantageusement, la console 12 est agencée entre les deux sièges avant (non représentés) du véhicule.

Pour la suite de la description, on définit à titre non limitatif une direction longitudinale horizontale X-X, qui correspond à l'axe longitudinal du véhicule. A titre non limitatif, on utilisera une orientation de l'arrière vers l'avant, suivant la direction longitudinale X-X, qui correspond à une orientation de la droite vers la gauche, en considérant la figure 2.

A titre non limitatif, on utilisera le terme « transversal » pour qualifier une direction sensiblement horizontale et orthogonale à la direction longitudinale X-X.

La console 12 forme ici un caisson, ou compartiment, qui est délimité par deux parois verticales longitudinales 16, 18, par une paroi avant transversale 20, inclinée vers l'arrière par rapport à la verticale, et par une paroi transversale horizontale supérieure 22.

La console 12 comporte, à l'arrière, une ouverture 24.

La table 10 comporte une portion centrale 26 et deux panneaux latéraux 28, 30, qui sont articulés sur la portion centrale 26.

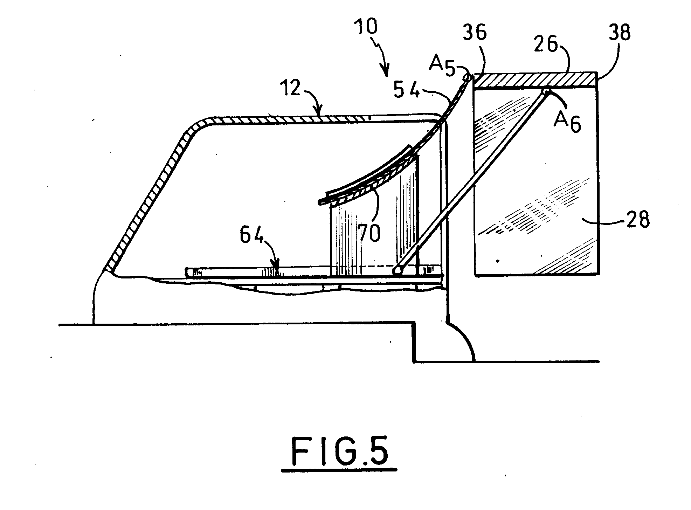

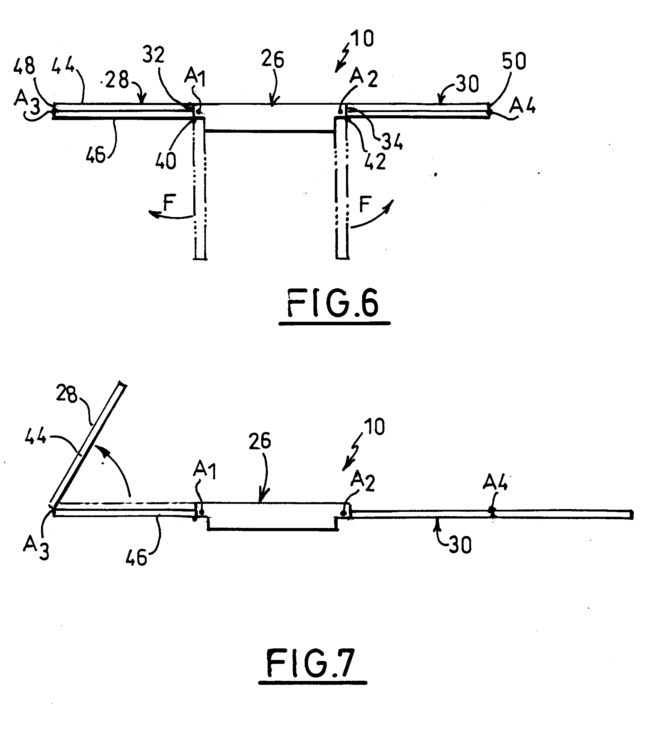

La table 10 est mobile entre la position escamotée, qui est représentée sur les figures 1 et 2, et une position horizontale d'utilisation, qui est représentée sur les figures 5 et 6.

On décrit maintenant la structure générale de la table 10, lorsqu'elle occupe sa position d'utilisation.

Dans la position d'utilisation, la portion centrale 26 et les panneaux latéraux 28, 30 s'étendent globalement dans un plan horizontal.

La portion centrale 26 a ici la forme d'une plaque rectangulaire, qui comporte deux bords longitudinaux 32, 34, un bord transversal avant 36 et un bord transversal arrière 38.

Chaque panneau latéral 28, 30, ici de forme globalement rectangulaire, comporte un bord longitudinal 40, 42 qui est monté à pivotement autour d'un axe longitudinal principal A1, A2, sur un bord longitudinal associé 32, 34 de la portion centrale 26.

Avantageusement, chaque panneau latéral 28, 30 est constitué ici de deux plaques rectangulaires 44, 46, qui sont superposées dans le sens de leur épaisseur.

L'une des plaques 44 est montée à pivotement, par rapport à l'autre 46, autour d'un axe longitudinal secondaire A3, A4, qui est agencé au voisinage du bord longitudinal 48, 50 du panneau 28, 30 opposé à la portion centrale 26.

Les articulations autour des axes A1, A2, A3, A4 sont réalisées au moyen de dispositifs connus (non représentés) formant charnières.

Selon le premier mode de réalisation représenté ici, la table 10 est équipée de moyens de guidage et de soutien 52 comportant une coulisse 54, qui est prévue pour coopérer avec une glissière 56, et qui est liée au bord transversal avant 36 de la portion centrale 26 de manière pivotante, autour d'un axe transversal A5.

Les moyens de guidage et de soutien 52 comportent aussi une biellette 58, qui est liée, par une extrémité axiale arrière 60, à la face inférieure 62 de la portion centrale 26 de manière pivotante, autour d'un axe transversal A6, et qui est montée à coulissement dans un rail longitudinal 64, par son extrémité axiale avant 66.

Le rail longitudinal 64 s'étend à l'intérieur de la console 12, par exemple sur un soubassement 68 de la console 12.

L'extrémité avant 66 de la biellette 58 peut être munie d'un galet libre à rotation, en vue de faciliter le coulissement de la biellette 58 dans le rail longitudinal 64.

La coulisse 54 a ici la forme d'une bande rigide qui est courbée de sorte que son profil, dans un plan vertical longitudinal, a globalement la forme d'un arc de cercle convexe vers le bas.

La glissière 56, qui a une forme complémentaire de la coulisse 54, est portée par la paroi supérieure 70 d'un support 72.

Le support 72 repose ici sur le soubassement 68 de la console 12, grâce à deux jambes 74, 76, qui sont agencées de chaque côté du rail longitudinal 64.

En position escamotée, la portion centrale 26 s'étend dans un plan transversal vertical, à l'intérieur et à l'arrière de la console 12, et les panneaux latéraux 28, 30 s'étendent chacun dans un plan longitudinal vertical, vers l'avant, à l'intérieur de la console 12.

On note que, avantageusement, en position escamotée, la portion centrale 26 peut être agencée de manière à former globalement une paroi de fermeture pour l'ouverture arrière 24 de la console 12.

De préférence, les moyens de guidage 52 comportent des moyens de butée (non représentés), par exemple dans la glissière 56, pour bloquer la coulisse 54 dans une position de butée avant, correspondant à la position escamotée, et dans une position de butée arrière, correspondant à la position d'utilisation.

Le rail longitudinal 64 peut être cranté, de manière à indexer l'extrémité avant 66 de la biellette 58 dans une position arrière d'indexation, qui correspond à la position d'utilisation.

On décrit maintenant la cinématique de la table 10, lorsqu'elle est déplacée de sa position escamotée jusqu'à sa position d'utilisation, notamment en référence aux figures 2 à 7.

En déplaçant la portion centrale 26 vers l'arrière, la coulisse 54 coopère avec la glissière 56 de manière à guider le bord avant 36 de la portion centrale 26 vers l'extérieur de la console 12 et vers le haut. Simultanément, la biellette 58 se déploie vers l'arrière et vers le haut, en coulissant dans le rail longitudinal 64.

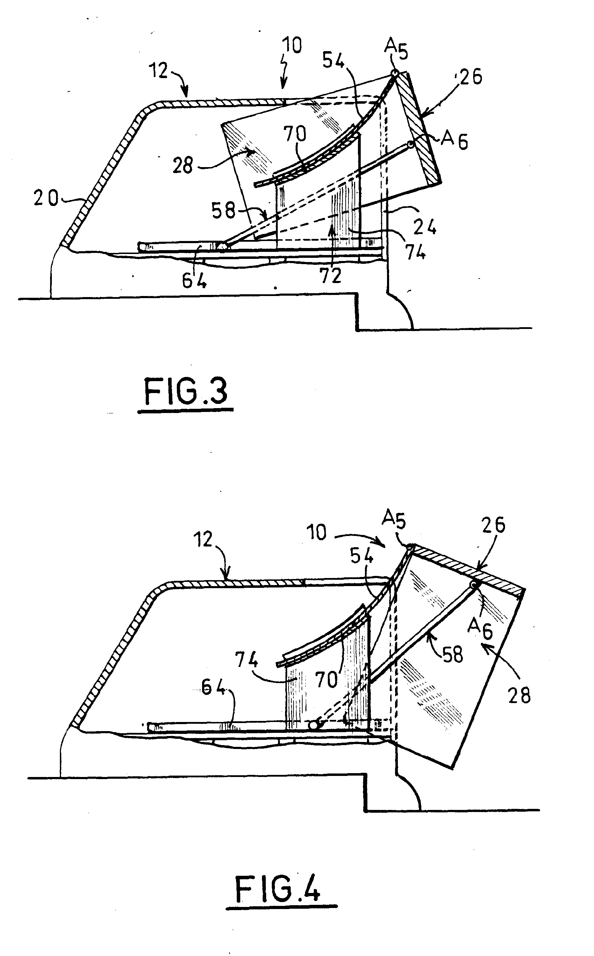

Dans une première position intermédiaire de la table 10, qui est représentée sur la figure 3, la coulisse 54 atteint sa position de butée arrière. A partir de cette position intermédiaire, seule la biellette 58 continue de coulisser vers l'arrière, comme l'illustre la figure 4, jusqu'à ce que la biellette 58 atteigne sa position arrière d'indexation, qui est représentée sur la figure 5.

Lorsque la biellette 58 occupe sa position arrière d'indexation, la portion centrale 26 occupe sa position horizontale d'utilisation. La biellette 58 soutient la portion centrale 26 dans sa position d'utilisation en formant un arc-boutant.

Dans la seconde position intermédiaire de la table 10, qui est représentée sur la figure 5, les panneaux latéraux 28, 30 occupent la même position relative, par rapport à la portion centrale 26, que dans la position escamotée de la table 10. C'est à dire que les panneaux latéraux s'étendent chacun dans un plan longitudinal vertical, ici vers le bas par rapport à la portion centrale 26.

A partir de la seconde position intermédiaire, il reste à déployer les panneaux latéraux 28, 30 vers les côtés et vers le haut, en les faisant pivoter autour de leurs axes A1, A2 respectifs, pour que toute la table 10 occupe sa position d'utilisation.

Le déploiement des panneaux latéraux 28, 30 est illustré par les figures 6 et 7.

Sur la figure 6, on a représenté en traits fantômes les panneaux latéraux 28, 30 dans la seconde position intermédiaire, et les flèches F indiquent le mouvement effectué par les panneaux 28, 30 pour atteindre leurs positions horizontales respectives, qui correspondent à la position d'utilisation de la table 10, et qui sont représentées en trait fort.

Entre la seconde position intermédiaire et la position d'utilisation, le panneau latéral gauche 28 a pivoté d'un quart de tour, dans le sens horaire, autour de son axe longitudinal principal A1, et le panneau latéral droit 30 a pivoté d'un quart de tour, dans le sens anti-horaire, autour de son axe longitudinal principal A2.

Selon le mode de réalisation représenté ici, il est possible d'augmenter l'aire de la table 10, dans le plan horizontal, grâce aux plaques 44, 46. Pour cela, on fait pivoter, autour de l'axe longitudinal secondaire A3, A4 associé, la plaque supérieure 44 de chaque panneau latéral 28, 30, par rapport à la plaque inférieure 46 associée, jusqu'à ce que la plaque supérieure 44 s'étende horizontalement à côté de la plaque inférieure 46, du côté opposé à la portion centrale 26. Ce pivotement est illustré par la figure 7.

Bien entendu, la table 10 comporte des moyens de retenue (non représentés) pour maintenir les panneaux latéraux 28, 30 dans leurs positions horizontales respectives. De tels moyens de retenue peuvent s'inspirer des systèmes utilisés dans les tables d'ameublement du type à rallonges pivotantes.

Pour ranger la table 10, il suffit d'effectuer les opérations décrites ci-dessus en ordre inverse, de manière à la déplacer depuis sa position d'utilisation jusqu'à sa position escamotée.

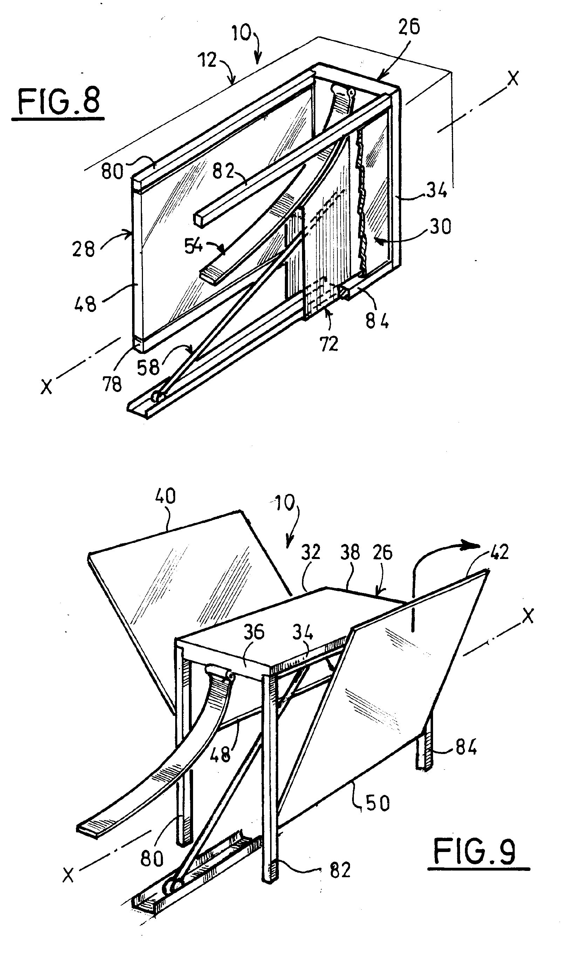

Les figures 8 à 13 illustrent un second mode de réalisation d'un agencement selon l'invention.

Ce mode de réalisation se différencie du premier principalement par son mode d'articulation des panneaux latéraux 28, 30, par rapport à la portion centrale 26.

La portion centrale 26 comporte ici des poutres 78, 80, 82, 84 qui sont fixées respectivement à chacune des extrémités longitudinales de ses bords longitudinaux 32, 34.

Les poutres 78, 80, 82, 84 s'étendent longitudinalement vers l'avant, lorsque la portion centrale 26 occupe sa position escamotée, qui est représentée sur la figure 8, et elles s'étendent verticalement vers le bas, lorsque la portion centrale 26 occupe sa position d'utilisation, qui est représentée sur la figure 9.

Avant le déploiement des panneaux latéraux 28, 30, par exemple dans la position escamotée, chaque paire de poutres 78, 80, 82, 84 associée à un bord longitudinal 32, 34 déterminé de la portion centrale 26, s'étend le long des bords en vis-à-vis du panneau latéral 28, 30 associé.

Chaque poutre 78, 80, 82, 84 comporte, en vis-à-vis du bord du panneau latéral 28, 30 associé, une rainure de guidage 86 qui est prévue pour recevoir un pion associé 88 du panneau latéral 28, 30.

Chaque pion 88 est agencé au voisinage du bord longitudinal 48, 50 du panneau 28, 30 qui est situé à l'opposé, par rapport à la portion centrale 26, lorsque le panneau 28, 30 n'est pas encore déployé.

Chaque panneau 28, 30 comporte donc deux pions 88 qui s'étendent suivant la même direction longitudinale, en considérant la figure 9, mais dans des sens opposés. Les deux pions 88 d'un panneau latéral 28, 30 forment l'axe de pivotement principal A1, A2 du panneau 28, 30.

Chaque axe de pivotement principal A1, A2 est donc susceptible de se déplacer, par rapport au bord longitudinal associé 32, 34 de la portion centrale 26, entre une position distale, correspondant à la position escamotée, et une position proximale, correspondant à la position d'utilisation.

Le fonctionnement de ce deuxième mode de réalisation est le suivant.

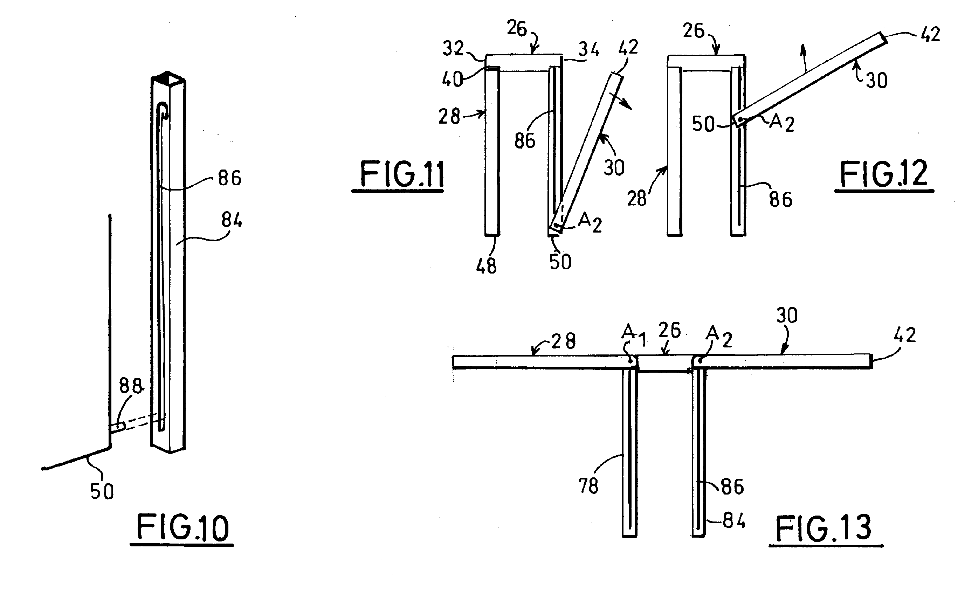

Le déplacement de la table 10 jusqu'à la seconde position intermédiaire étant inchangé, par rapport au premier mode de réalisation, on décrit uniquement le déploiement d'un panneau latéral 28, 30, ici le panneau latéral droit 30, en considérant les figures 11 et 12.

Dans un premier temps, on fait pivoter légèrement le panneau 30 autour de son axe de pivotement principal A2, c'est à dire autour des pions 88, ici dans le sens horaire, de manière à décaler latéralement le bord longitudinal 42 du panneau 30 qui est adjacent à la portion centrale 26.

Puis, on fait coulisser les pions 88 du panneau 30 dans les rainures 86 associées, de manière à déplacer verticalement vers le haut le bord longitudinal 50, qui était agencé à l'opposé de la portion centrale 26, vers le bord longitudinal droit 34 de la portion centrale 26. Pendant le coulissement des pions 88 vers le haut, le panneau 30 est rabattu progressivement vers sa position horizontale d'utilisation, en continuant de le faire pivoter dans le sens horaire autour de son axe principal A2.

A la fin du déploiement, les panneaux 28, 30 occupent leurs positions d'utilisation, représentées sur la figure 13, qui sont similaires aux positions d'utilisation du premier mode de réalisation.

Bien entendu, les panneaux latéraux 28, 30 peuvent aussi être équipés de plaques articulées 44, 46 comme dans le premier mode de réalisation.

On note que, dans les différents modes de réalisation décrits précédemment, il est possible de déployer un seul panneau latéral 28, 30, ce qui permet de libérer de l'espace dans l'habitacle du véhicule, tout en permettant l'utilisation d'une partie de la table 10.

Selon une variante de réalisation (non représentée) de l'invention, le déplacement et le déploiement de la table 10 peut être motorisé en totalité ou en partie. A cet effet, on peut, par exemple, remplacer le rail longitudinal 64 par une crémaillère et on peut équiper l'extrémité avant 66 de la biellette 58 d'une roue dentée motorisée.

Un avantage important de l'agencement selon l'invention est qu'il permet un déploiement de la table 10 vers l'arrière, par rapport à la console 12, de sorte que la console 12 peut être agencée entre deux sièges, dans l'habitacle du véhicule. Ainsi, contrairement à certains dispositifs connus, la console 12 de rangement de la table 10 n'encombre pas une allée desservant une rangée de sièges.

De plus, grâce au déploiement de la table 10 à travers une ouverture 24 située à l'arrière, la paroi supérieure 22 de la console 12 reste fixe et elle peut être utilisée comme accoudoir, ou comme surface de rangement, quelque soit la position de la table 10.

On note que la table 10 se déploie en porte-à-faux complet vers l'arrière, par rapport à la console 12, ce qui n'entraîne aucune gêne pour les jambes des usagers.

Selon une variante de réalisation (non représentée) de l'invention, la table 10 peut comporter plusieurs coulisses 54 associées à plusieurs glissières 56.

## Revendications

1. Agencement d'une table (10) escamotable dans l'habitacle d'un véhicule automobile, comportant une console (12) qui est montée sur le plancher du véhicule et qui délimite un compartiment pour le rangement de la table (10) en position escamotée, du type dans lequel la table (10) comporte au moins un panneau (28, 30) qui s'étend globalement dans un plan longitudinal vertical, en position escamotée, et qui s'étend globalement dans un plan horizontal, en position d'utilisation,
**caractérisé en ce que** la table (10) comporte une portion centrale (26) sur laquelle le panneau (28, 30) est articulé autour d'un axe (A1, A2) sensiblement parallèle à un bord longitudinal latéral (32, 34) de la portion centrale (26) ;
**en ce que** la portion centrale (26) est articulée autour d'un axe sensiblement transversal (A5), entre la position escamotée, dans laquelle les bords longitudinaux (32, 34) de la portion centrale (26) s'étendent globalement verticalement vers le bas, à l'intérieur de la console (12), et la position d'utilisation, dans laquelle les bords longitudinaux (32, 34) de la portion centrale (26) s'étendent globalement longitudinalement vers l'arrière, à l'extérieur de la console (12),
de manière que le panneau (28, 30) parvienne à sa position d'utilisation, à partir de sa position escamotée, en pivotant, dans un premier temps, vers l'arrière et vers le haut, avec la portion centrale (26), autour de l'axe transversal (A5) et, dans un second temps, vers un côté et vers le haut, autour de son axe longitudinal (A1, A2).

2. Agencement selon la revendication 1, **caractérisé en ce que** la console (12) délimite à l'arrière une ouverture (24) pour le passage de la table (10) lorsqu'elle pivote autour de son axe transversal (A5), et **en ce que**, en position escamotée, la portion centrale (26) forme un élément de fermeture de ladite ouverture (24).

3. Agencement selon l'une quelconque des revendications précédentes, **caractérisé en ce que** l'axe transversal de pivotement (A5) de la portion centrale (26) est agencé à l'extrémité arrière libre d'au moins une coulisse (54), qui coopère avec une glissière (56), agencée dans la console (12), de manière à permettre le déplacement de l'axe transversal de pivotement (A5), depuis l'intérieur de la console (12), en position escamotée, vers l'extérieur et vers le haut, en position d'utilisation.

4. Agencement selon l'une quelconque des revendications précédentes, **caractérisé en ce qu'**une biellette de soutien (58) est articulée sur la portion centrale (26) et est montée coulissante longitudinalement à l'intérieur de la console (12), jusqu'à une position arrière indexée correspondant à la position d'utilisation, de manière à former un dispositif de soutien de la portion centrale (26) en position d'utilisation.

5. Agencement selon l'une quelconque des revendications précédentes, **caractérisé en ce que** l'articulation (A1, A2) du panneau (28, 30) est agencée au voisinage d'un bord longitudinal (32, 34) de la portion centrale (26).

6. Agencement selon l'une quelconque des revendications 1 à 5, **caractérisé en ce que** l'axe de pivotement longitudinal (A1, A2) du panneau (28, 30) est mobile suivant une direction sensiblement orthogonale à un bord longitudinal (32, 34) de la portion centrale (26), entre une position distale et une position proximale, par rapport audit bord longitudinal (32, 34).

7. Agencement selon l'une quelconque des revendications précédentes, **caractérisé en ce que** le panneau (28, 30) comporte deux plaques (44, 46) qui sont superposées dans le sens de l'épaisseur et qui sont articulées, l'une par rapport à l'autre, de sorte que l'une des plaques (44, 46) puisse être déployée par rapport à l'autre en augmentant l'aire de la table (10) dans un plan horizontal.

8. Agencement selon l'une quelconque des revendications précédentes, **caractérisé en ce que** la portion centrale (26) est équipée de deux panneaux (28, 30) qui sont articulés autour de deux axes longitudinaux (A1, A2) associés à chaque bord longitudinal (32, 34) de la portion centrale (26).
